(19) Europäisches Patentamt

European Patent Office

Office européen des brevets

(11) **EP 4 641 217 A1**

(12) **EUROPEAN PATENT APPLICATION**
published in accordance with Art. 153(4) EPC

(43) Date of publication:
**29.10.2025 Bulletin 2025/44**

(21) Application number: **23905232.7**

(22) Date of filing: **19.07.2023**

(51) International Patent Classification (IPC):
**G01Q 70/08** (2010.01)

(52) Cooperative Patent Classification (CPC):
**G01Q 70/08**

(86) International application number:
**PCT/CN2023/108131**

(87) International publication number:
**WO 2024/131051 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 CN 202211662285**

(71) Applicant: **Parcan GmbH**
**98693 Ilmenau (DE)**

(72) Inventor: **ZHOU, Xiangqian**
**Shanghai 201206 (CN)**

(74) Representative: **Viering, Jentschura & Partner mbB**
**Patent- und Rechtsanwälte**
**Am Brauhaus 8**
**01099 Dresden (DE)**

(54) **SCANNING PROBE SYSTEM MEASUREMENT METHOD FOR IMPROVING SIGNAL-TO-NOISE RATIO, AND SCANNING PROBE SYSTEM**

(57) Embodiments of the present invention provide a scanning probe system measurement method for improving signal-to-noise ratio and a scanning probe system. The measurement method comprises: controlling at least one target measurement probe among a plurality of measurement probes and at least one target reference probe among a plurality of measurement probes to measure, wherein the target measurement probe scans and measures a target surface, and the target reference probe measures a reference surface, and a measurement time difference between the target measurement probe and the target reference probe is less than a preset time difference threshold; acquiring a surface detection signal of the target surface measured by each target measurement probe, and acquiring a reference measurement signal dominated by noise signals formed due to environmental influences when each target reference probe measures the reference surface; for each target measurement probe, correcting the surface detection signal of the target measurement probe by the reference measurement signal of the target reference probe, thereby greatly improving the signal-to-noise ratio of the measurement signals of the probes.

```
                    ┌─────────┐
                    │  Start  │
                    └────┬────┘
                         │
                         ▼
┌──────────────────────────────────────────────────────┐ 101
│ controlling at least one target measurement probe      │
│ among a plurality of measurement probes and at least   │
│ one target reference probe among a plurality of        │
│ measurement probes to measure, wherein the target      │
│ measurement probe scans and measures a target          │
│ surface, and the target reference probe measures a     │
│ reference surface, and a measurement time difference   │
│ between the target measurement probe and the target    │
│ reference probe is less than a preset time difference  │
│ threshold                                              │
└──────────────────────────┬─────────────────────────────┘
                           │
                           ▼
┌──────────────────────────────────────────────────────┐ 102
│ acquiring a surface detection signal of the target     │
│ surface measured by each target measurement probe,     │
│ and acquiring a reference measurement signal           │
│ dominated by noise signals formed due to environmental │
│ influences when each target reference probe measures   │
│ the reference surface                                  │
└──────────────────────────┬─────────────────────────────┘
                           │
                           ▼
┌──────────────────────────────────────────────────────┐ 103
│ for each target measurement probe, correcting the      │
│ surface detection signal of the target measurement     │
│ probe by the reference measurement signal of the       │
│ target reference probe                                 │
└──────────────────────────┬─────────────────────────────┘
                           │
                           ▼
                    ┌─────────┐
                    │   End   │
                    └─────────┘
```

**FIG.5**

## Description

### Technical field

The present invention relates to the technical field of probe measurement, and specifically to a scanning probe system measurement method for improving signal-to-noise ratio and a scanning probe system.

### Background technique

The working modes of scanning probes are mainly atomic force microscopy measurement mode, other working modes are conductive atomic force microscopy, magnetic force microscope, scanning tunneling microscopy, scanning kelvin probe force microscopy, scanning probe lithography, and scanning probe single ion implantation for example.

The measurement modes of the atomic force microscopy in all working modes of the scanning probe can be divided into two types, namely:

Probe working mode 1 (constant height mode): the probes are kept at a constant height to scan and measure the surface of the sample under test, due to the fluctuation of the sample surface, the attractive force of the van der Waals force on the sample surface sensed by the probes is different; the closer the probes are to the sample surface, the greater the attractive force of the van der Waals force; conversely, the farther the probes are from the sample surface, the smaller the attractive force of the van der Waals force. According to the relationship between the attractive force of van der Waals force and the distance between the probes and the sample surface, the scan diagram of the distance from the probe to the sample surface, i.e., the three-dimensional topography of the sample surface can be calculated.

Probe working mode 2 (constant force mode): the van der Waals attractive force from the probe to the sample surface is kept unchanged, that is, as the probe is moved to scan the next measurement point, due to the fluctuation of the sample surface, the height distance between the measurement point and the probes is not the same, so that the van der Waals attractive forces on the sample surface sensed by the probes are different, and the same van der Waals force as the previous measurement point can be achieved by increasing or decreasing the distance between the probe and the sample surface. At this time, the movement amount of the probe in the height direction from the surface is the height difference between two measurement points on the sample surface, and the height difference obtained by two-dimensional scanning of the sample surface can form a three-dimensional topography.

Since the measurement mode of the scanning probe microscope is to form scanning lines or scanning surfaces by measuring one measurement point at a time, its speed depends on the measurement time of each scanning point. Generally, the measurement time or sampling time required by these measurement points is in the order of milliseconds or even sub-milliseconds. An increase in measurement speed will lead to an increase in the number of measurements for each measurement point within the same overall measurement time, resulting in an increase in the signal-to-noise ratio of the measurement point.

Since the ideal precision measured by the scanning probe microscope is in the order of nanometer, sub-nanometer or even picometer, within this dynamic range, the noise caused by the environment where the scanning probe microscope is located has become a huge problem and challenge that is always difficult to overcome. Even if the measured sample is placed on a passive vibration damping base with an active vibration absorber and an acoustic enclosure, it is still generally difficult to solve the problem of noise in high-precision measurement. So far there is no more suitable device and method to reduce environmental vibration and noise significantly. Moreover, the existing devices for reducing vibration and noise have greatly increased the cost and complexity of the system, especially hindering the wide application of scanning probe microscopes in industrial environments and high-speed measurement fields.

How to achieve a higher signal-to-noise ratio of the scanning probe microscope measurement signal than the existing scanning probe microscope under the same vibration absorber and acoustic enclosure, this is the "stranglehold" problem of the current probe microscope, and moreover the key to the wider application of scanning probe microscopy.

Similarly, under the same signal-to-noise ratio, reducing the requirements on vibration absorber and acoustic enclosure will greatly facilitate the user to realize the measurement and other working modes of the scanning probe microscope in a simpler environment. Based on the above technical problems, the inventor proposed the technical solution of this patent application.

### Summary of the invention

The purpose of the present invention is to provide a scanning probe system measurement method for improving signal-to-noise ratio and a scanning probe system, which greatly improves the signal-to-noise ratio of the probe measurement signal, and contributes to the improvement of the signal-to-noise ratio of the probe for atomic force microscopy measurements, and improves the stability and repeatability of the probe in the formation of probe lithography by electron field emission.

In order to achieve the above object, the present invention provides a scanning probe system measurement method for improving the signal-to-noise ratio, the scanning probe system comprises: a first type of probe and a second type of probe, the first type of probe comprises a plurality of measurement probes, the second type of probe comprises a plurality of reference probes, a lateral resolution of the reference probes measuring the reference surface is lower than a preset resolution value; the measurement method comprises: controlling at least one target measurement probe among the plurality of measurement probes and at least one target reference probe among the plurality of reference probes to measure, wherein the target measurement probe scans and measures a target surface, and the target reference probe measures the reference surface, and a measurement time difference between the target measurement probe and the target reference probe is less than a preset time difference threshold; acquiring a surface detection signal of the target surface measured by the respective target measurement probe, and acquiring a reference measurement signal dominated by a noise signal formed due to environmental influence when the respective target reference probe measures the reference surface; for each said target measurement probe, correcting the surface detection signal of the target measurement probe by the reference measurement signal of the target reference probe.

The present invention also provides a scanning probe system, comprising: a first type of probe, a second type of probe, a carrying drive device, the main control device and a plurality of longitudinal controllers, the first type of probe comprises a plurality of measurement probes, the second type of probe comprises a plurality of reference probes, and both the measurement probes and the reference probes are fixed on the carrying drive device, the carrying drive device is communicatively connected to the main control device, the measurement probes are in one-to-one correspondence with and communicatively connected to the longitudinal controllers, and the longitudinal controllers are communicatively connected to the main control device; a lateral resolution of said reference probe measuring the reference surface is lower than a preset resolution value; the carrying drive device (at least one) is used to separately or jointly drive the measurement probes and the reference probes to move; the main control device is used to control at least one target measurement probe among the plurality of measurement probes and at least one target reference probe among the plurality of measurement probes to measure simultaneously; the target measurement probe is used to scan and measure a target surface; the target reference probe is used to measure the reference surface; the main control device is also used to acquire a surface detection signal of the target surface measured by the respective target measurement probe, and to acquire a reference measurement signal dominated by a noise signal formed due to environmental influences when the respective target reference probe measures the reference surface; the main control device is further used to, for each said target measurement probe, correct the surface detection signal of the target measurement probe by the reference measurement signal of the target reference probe; the longitudinal controller is used to control the movement of the measurement probe communicatively connected thereto in a direction perpendicular to the target surface.

In the embodiment of the present invention, when the target measurement probe measures, one target reference probe is controlled to measure simultaneously with the target measurement probe, however, the lateral resolution of the target reference probe measuring the reference surface must be lower than the preset resolution value, especially lower than the lateral resolution of the target measurement probe, so that the target reference probe should be insensitive to the fluctuation of the reference surface, and the reference measurement signal output by the target reference probe is substantially insensitive to the three-dimensional morphology of the measured surface under the reference probe, but is a signal sensitive to the noise signal formed due to the influence of the environment on the target reference probe. Since the target reference probe and the target measurement probe measure simultaneously, the reference measurement signal output by the target reference probe can also reflect the noise contained in the surface detection signal measured by the target measurement probe, then, the reference measurement signal of the target reference probe can be used to remove the noise signal contained in the surface detection signal of each target measurement probe, which reduces the noise signal contained in the surface detection signal of the target measurement probe, and improves the signal-to-noise ratio of the surface detection signal of the target measurement probe. Therefore, it is possible that under the same signal-to-noise ratio requirement for the surface detection signal, the requirements of the scanning probe system for noise interference such as vibration and acoustic insulation in the environment can be reduced on the equipment, which contributes to the reduction of the cost of the probe system.

In one embodiment, for each said target measurement probe, correcting the surface detection signal of the target measurement probe by the reference measurement signal of the target reference probe, comprising: calculating a product of the reference measurement signal of the target reference probe and a preset weighting coefficient; for each of the target measurement probes, using a difference obtained by subtracting the product from the surface detection signal of the target measurement probe as a corrected measurement result of the target measurement probe. Thereby, the noise portion in the signal measured by the target measurement probe can be removed.

In one embodiment, the setting method of the preset weighting coefficient is: controlling both the measurement probe and the reference probe to perform non-scanning measurement; performing linear relationship fitting based on a first measurement signal measured by the measurement probe and a second measurement signal measured by the reference probe, and setting the preset weighting coefficient as a coefficient describing the linear relationship, so that the first measurement signal is equal to the second measurement signal multiplied by the preset weighting coefficient.

In one embodiment, for each of the target measurement probes, correcting the surface detection signal of the target measurement probe by the reference measurement signal of the target reference probe, comprising: calculating a product of the reference measurement signal of the target reference probe and a preset weighting coefficient; for each of the target measurement probes, adjusting the distance between the target measurement probe and the target surface based on a value obtained by multiplying the reference measurement signal of the target reference probe and a preset weighting coefficient, and reacquiring the surface detection signal of the target measurement probe as the corrected surface detection signal of the target measurement probe.

In one embodiment, the distance between a tip end of the reference probe and the reference surface is greater than a first preset distance value.

In one embodiment, the first preset distance value is the distance from the target measurement probe to the target surface.

In one embodiment, the radius of curvature of the tip end of the reference probe is larger than a preset radius of curvature, so that the lateral resolution of the reference probe measuring the reference surface is lower than the preset resolution value.

In one embodiment, the preset resolution value is the lateral resolution of the measurement probe.

In one embodiment, the preset radius of curvature is the radius of curvature of the tip end of the target measurement probe.

In one embodiment, the shape of the tip end of the reference probe is any one of the following shapes: three-dimensional spherical, planar square, planar circle and planar ellipse.

In one embodiment, the radius of curvature of the tip end of the target probe is between 1 nm and 50 nm, and the radius of curvature of the tip end of the reference probe is at least 5 times the radius of curvature of the tip end of the target probe, the radius of curvature of the tip end of the reference probe is at least between 5 nm and 250 nm.

In one embodiment, the first type of probe and the second type of probe are respectively located on the same probe base or on different probe bases.

In one embodiment, the measurement probes in the first type of probe are used to perform spatially scanning measurement on the target surface or operate at each scanning position, the reference probes in the second type of probe are forbidden to perform spatially scanning measurement on the reference surface, and the reference probe measures the same location on the reference surface each time.

In one embodiment, the radius of curvature of the tip end of the reference probe in the second type of probe is greater than, equal to or smaller than the radius of curvature of the tip end of the measurement probe in the first type of probe , the distance from the reference probe in the second type of probe to the reference surface is greater than, equal to or smaller than the distance from the measurement probe in the first type of probe to the target surface.

In one embodiment, the distance between the first type of probe and the second type of probe is greater than a second preset distance value.

In one embodiment, the first type of probe and the second type of probe have different vibration frequencies, and the first type of probe and the second type of probe are located on the same probe base.

In one embodiment, the first type of probe and the second type of probe are active probes, passive probes or tuning fork probes.

In one embodiment, the working mode of the measurement probe comprises any one or any combination of the following: atomic force microscope working mode, conductive atomic force microscope working mode, scanning tunneling microscope working mode, scanning probe magnetic force microscope working mode, scanning kelvin probe force microscope working mode, scanning probe lithography working mode, and scanning probe single ion implantation working mode.

In one embodiment, the controlling at least one target measurement probe among the plurality of measurement probes and at least one target reference probe among the plurality of reference probes to measure, comprising: based on the preset corresponding relationship between the measurement probe and the reference probe, controlling at least one target measurement probe among the plurality of measurement probes and at least one target reference probe corresponding to the target measurement probe among the plurality of reference probes to measure.

## Brief description of drawings

Fig. 1 is a schematic diagram of a scanning probe system applied to a scanning probe system measurement method for improving signal-to-noise ratio according to the first embodiment of the present invention.

Fig. 2 is a schematic diagram of measuring the surface of a sample with probes of different curvature radii in the scanning probe system according to the first embodiment of the present invention;

Fig. 3 is a schematic diagram of the measurement probe and the reference probe being fixed on the same base in the scanning probe system according to the first embodiment of the present invention;
Fig. 4 is a schematic diagram of the measurement probe and the reference probe being fixed on different bases in the scanning probe system according to the first embodiment of the present invention;
Fig. 5 is a specific flow chart of the scanning probe system measurement method for improving signal-to-noise ratio according to the first embodiment of the present invention;
Fig. 6 is a schematic diagram of one target measurement probe and one target reference probe measuring simultaneously according to the first embodiment of the present invention.

## Detailed description of embodiments

Each embodiment of the present invention will be described in detail hereinafter in connection with the accompanying drawings, so that the objects, features and advantages of the present invention can be more clearly understood. It should be understood that the embodiments shown in the accompanying drawings are not intended to limit the scope of the present invention, but only to illustrate the substantial spirit of the technical solutions of the present invention.

In the description below, certain specific details are set forth for the purpose of illustrating various embodiments of the disclosure in order to provide a thorough understanding of various embodiments of the disclosure. However, those skilled in art will recognize that embodiments may be practiced without one or more of these specific details. In other instances, familiar devices, structures and techniques associated with the present application may not be shown or described in detail so as to avoid unnecessarily confusing the description of the embodiments.

Unless the context requires otherwise, the word "comprises" and its variants, such as "contains" and "has" should be understood throughout the specification and claims as having an open, inclusive meaning, i.e., should be interpreted as "includes, but is not limited to".

References to "one embodiment" or "an embodiment" throughout the specification indicate that a particular feature, structure, or characteristic described in conjunction with the embodiment is included in at least one embodiment. Thus, the occurrence of "in one embodiment" or "in an embodiment" throughout the specification need not all refer to the same embodiment. In addition, particular features, structures, or characteristics may be combined in any manner in one or more embodiments.

As used in the specification and appended claims, the singular forms "a" and "the" include plural referents, unless the context clearly provides otherwise. It should be noted that the term "or" is generally used in a sense that includes "or/and" unless the context clearly states otherwise.

In the following description, in order to clearly show the structure of the invention and how it works, it will be described with the help of many directional words, but the words "front", "back", "left", "right", "outside", "inside", "outward", "inward", "up", "down", etc. should be understood as terms of convenience and not as limiting words.

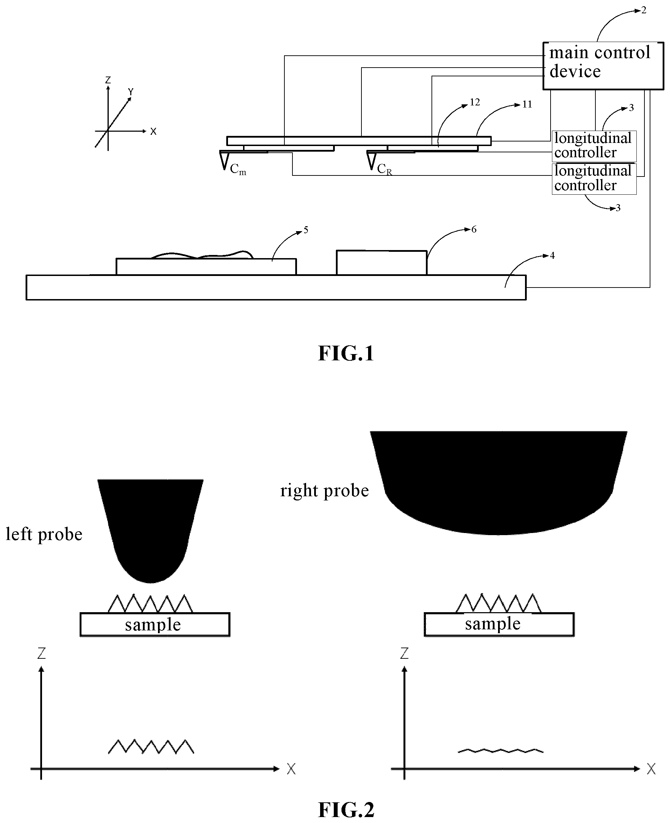

The first embodiment of the present invention relates to a scanning probe system measurement method for improving signal-to-noise ratio, which is applied to a scanning probe system, wherein the scanning probe system is capable of using the measurement method of this embodiment to improve the signal-to-noise ratio of the surface detection signal acquired by the measurement probe scanning and measuring the measured sample surface. In this embodiment, referring to Fig. 1, the scanning probe system comprises: a first type of probe, a second type of probe, a carrying drive device, a main control device 2 and a plurality of longitudinal controllers 3, the first type of probe comprises a plurality of measurement probes $C_m$ (only one measurement probe is schematically drawn in the figure), and the second type of probe comprises a plurality of reference probes $C_R$ (only one reference probe is schematically drawn in the figure), both the measurement probe $C_m$ and the reference probe $C_R$ are fixed on the carrying drive device, the carrying drive device is communicatively connected to the main control device 2, the measurement probes $C_m$ are in one-to-one correspondence with and communicatively connected to the longitudinal controllers 3 , and each longitudinal controller 3 is communicatively connected to the main control device 2; tips of the first type of probe and the second type of probe face the surface of the sample 5 placed on the sample stage 4. Wherein, the reference probes $C_R$ and the longitudinal controllers 3 are also in one-to-one correspondence with and communicatively connected to the longitudinal controllers 3; in addition, the communication connection line shown in Fig. 1 is only a schematic representation, and the communication connection can be performed through a unified wiring in practice.

In Fig. 1, the reference surface is the surface of the reference sample 6 placed on the sample stage 4, and the target surface is the surface of the sample 5 to be measured, that is, the reference probe is used to measure the surface of the reference sample 6, and the target measurement probe is used to measure the surface of the sample 5 to be measured; however, it is not limited to this, the reference surface measured by the reference probe can also be set on the same surface of the sample as the target surface measured by the target measurement probe.

In this embodiment, the lateral resolution of the reference probe measuring the reference surface is controlled to be lower than a preset resolution value, whereby the reference probe is insensitive to the fluctuations of the reference surface; Ideally, when the reference surface is a plane, it is possible to avoid the variation of the van der Waals force on the reference probe caused by the fluctuations of the reference surface, that is, to avoid the vertical movement of the reference probe. That is, the reference probe only responds to changes in the distance between the reference probe and the reference surface caused by vibrations from the environment. In Fig. 1, the reference surface is taken as a plane as an example, which is only a schematic representation, and there may also be a three-dimensional shape on it.

In one example, the distance between a tip end of the reference probe and the reference surface is greater than a first preset distance value, so that the lateral resolution of the reference probe measuring the reference surface is lower than the preset resolution value.

In one example, the radius of curvature of the tip end of the reference probe is set to be larger than the preset radius of curvature, so that the lateral resolution of the reference probe measuring the reference surface is lower than the preset resolution value.

In one example, the preset resolution value is the lateral resolution of the measurement probe, that is, the lateral resolution of the reference probe measuring the reference surface is lower than the lateral resolution of the probe measuring the target surface. At this time, the reference probe is less sensitive to fluctuations on the reference surface than the target probe.

In one example, the shape of the tip end of the reference probe is any one of the following: three-dimensional spherical, plane square, or ellipse and plane circle, which are only examples and do not limit the shape of the tip end of the reference probe, that is, the tip end of the reference probe can be in any shape, and the radius of curvature of the tip end of the reference probe is larger than the preset radius of curvature, so that the lateral resolution of the reference surface measured by the reference probe is lower than the preset resolution value. For example, the radius of curvature of the tip end of the reference probe is greater than the radius of curvature of the tip end of the target probe. The larger the radius of curvature of the probe, the lower the lateral resolution of the three-dimensional topography of the reference surface measured by the probe. As shown in Fig. 2, the radius of curvature of the tip end of the probe on the left is smaller than the radius of curvature of the tip end of the probe on the right. After the two probes measure the same surface structure, the lateral resolution of the sample surface topography measured by the probe on the left is higher than that measured by the probe on the right; the distance from the left probe to the sample surface is smaller than the distance from the right probe to the sample surface, which also causes the lateral resolution of the sample surface topography measured by the left probe to be higher than that measured by the right probe; at the same time, the proportion of noise signal components in the signal measured by the left probe is smaller than that measured by the right probe.

In one example, the distance between the tip end of the reference probe and the reference surface is greater than a first preset distance value, the larger the distance between the reference probe and the reference surface, the lower the lateral resolution of the reference probe for measuring the reference surface. Setting the distance between the tip end of the target probe and the measurement surface to be greater than the first preset distance value enables the lateral resolution of the reference probe measuring the reference surface to be lower than the preset resolution value. For example, setting the distance between the tip end of the reference probe and the reference surface greater than the distance between the tip end of the target probe and the measurement surface enables the lateral resolution of the the reference probe measuring by to be lower than the lateral resolution of the target probe measuring the surface.

For example, if the radius of curvature of the target measurement probe is between 1 nanometer and 50 nanometers, the radius of curvature of the reference probe can be selected to be at least 5 times that of the target measurement probe, that means, the radius of curvature of the reference probe at least between 5nm and 250nm; if the radius of curvature of the reference probe is selected to be 20 times of the target measurement probe, the radius of curvature of the reference probe is at least between 20 nanometers and 1000 nanometers, and so on, and no further examples are given here. Although increasing the area of the tip end of the reference probe will increase the van der Waals force of the probe on the reference surface, and at this time, the distance between the tip end of the reference probe and the reference surface is further adjusted to be greater than the distance from the tip end of the target measurement probe to the measurement surface, that is, the reference probe is far away from the reference surface relative to the target measurement probe, and the van der Waals force will be reduced to the preset measurement range, this greatly reduces the spatial resolution of the reference probe measuring the reference surface, so as to greatly reduce the influence of the fluctuation structure of the reference surface on the measured value of the reference probe. That is, the reference surface measured by the reference probe can be regarded as a "flat" surface, at this time, even if the reference surface measured by the reference probe and the target surface measured by the target measurement probe are located on the same surface structure, the reference probe will not be too much affected by the surface fluctuation of the sample.

In this embodiment, the measurement probe can be an active probe, a passive probe or a tuning fork probe, and the reference probe can be an active probe, a passive probe or a tuning fork probe; as a specific example, for passive probes, the bending of the cantilever causes the laser beam emitted to the back of the cantilever to enter the position sensor after reflection, the bending of the cantilever is recorded, thereby acquiring the distance signal of the probe to the surface. For active probes, the cantilever is composed of a bimetal, and the resistive wire evaporated on it will change. The change of the resistance wire reflects the bending degree of the cantilever beam, thereby acquiring the distance signal of the probe to the surface. In this embodiment, in Fig. 1, the carrying drive device comprises a driving portion 11 and at least one scanner 12, a plurality of measurement probes $C_m$ may be divided into one or more probe groups, each probe group corresponds to one scanner 12, the probes in each probe group are fixed on the corresponding scanner 12. The scanner 12 is used to drive the probe fixed thereon to move in a small range in the X, Y, and Z three-dimensional spaces, the driving portion 11 is used to drive all the scanners 12 to drive all the probes to move in a large range in the X, Y, and Z three-dimensional spaces, in addition, the driving portion 11 is used to fix the probe array and meanwhile, it can also rotate in the X and Y axis directions for angle adjustment; the main control device 2 is respectively connected to the drive unit 11 and each scanner 12, and the main control device 2 can also be connected to each scanner 12 through the wiring on the drive unit 11, to control the movement of the driving portion 11 on the X, Y, and Z axes and the movement of the scanner 12 on the X, Y, and Z axes, and/or to adjust the angular rotation of the scanner 12 in the directions of the X, and Y axes. It should be noted that multiple probe groups can share the same scanner 12, that is, multiple probe groups are fixed on the same scanner 12, or each probe group corresponds to one scanner 12, that is, only one probe group is fixed on each scanner 12.

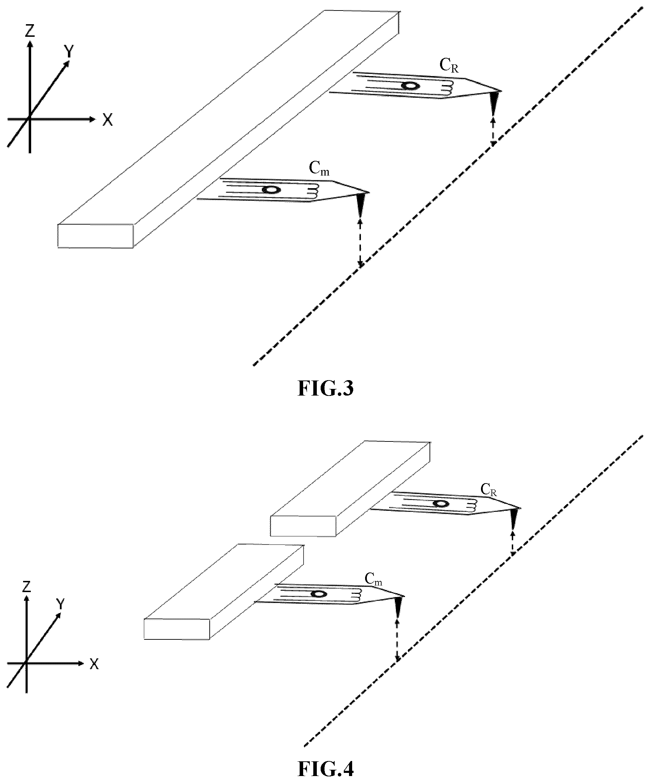

Wherein, the first type of probes and the second type of probes may have different vibration frequencies, and the first type of probe and the second type of probe are located on the same probe base; specifically, the base can be the scanner of the carrying drive device, and the measurement probe $C_m$ and the reference probe $C_R$ have different vibration frequencies, at this time, the measurement probe $C_m$ and the reference probe $C_R$ can be fixed on the same scanner on the carrying drive device, the measurement probe $C_m$ and the reference probe $C_R$ have different vibration frequencies, and the normal operation of each probe will not be affected by crosstalk. As shown in FIG. 3, one measurement probe $C_m$ and one reference probe $C_R$ form a MEMS probe array, and the two probes are fixed on the same base (scanner), except that the probes can move freely in the Z direction, the two probes move in other degrees of freedom simultaneously. At this time, because the environments in which the two probes are located are similar, the noise signals sensed by the two probes are also similar.

Alternatively, the measurement probe $C_m$ has the same vibration frequency as the reference probe $C_R$, at this time, the measurement probe $C_m$ and the reference probe $C_R$ can be fixed on different scanners on the carrying drive device, which can prevent the measurement probe $C_m$ and the reference probe $C_R$ from adversely affecting the working of the probes due to crosstalk. As shown in Fig.4, the measurement probe $C_m$ and the reference probe $C_R$ are respectively fixed on different bases (scanners), at this time, the reference probe $C_R$ does not need to follow the measurement probe $C_m$ for scanning and measuring, and the reference probe $C_R$ measures the reference surface without moving, so that a purer noise signal can be acquired.

In one embodiment, the first type of probe performs scanning measurements on the sample surface or uses the probes to perform other actions at each scanning position, while the second type of probe performs surface measurement in a non-scanning mode, that is, the measured surface position does not change each time.

In one embodiment, the radius of curvature of the tip end of the second type of probe is greater than, equal to or smaller than that of the first type of probe. The distance from the second type of probe to the measured surface is greater than, equal to or smaller than the distance from the first type of probe to the measured surface.

In addition, it is also possible to directly set the distance between the first type of probe and the second type of probe to be greater than the second preset distance value, that is, when the probe is fixed on the scanner, it should be ensure that the distance between the measurement probe $C_m$ and the reference probe $C_R$ is greater than a set distance value, at this time, even if the measurement probe $C_m$ and the reference probe $C_R$ have the same vibration frequency, crosstalk will not occur.

In another embodiment, the measurement probes in the first type of probe are used to perform spatial scanning measurements on the target surface of the sample or operate at each scanning position, the reference probes in the second type of probe are forbidden to perform the spatial scanning measurement on the reference surface, and the reference probes measure the same position of the reference surface each time. That is, each measurement probe can be set to perform spatial scanning measurement on the surface of the measured sample or be used for each scanning position to perform actions of other working modes; each reference probe is inhibited from performing spatial scanning measurements on the reference surface, and the measurement position of the reference probe remains unchanged for each measurement. At this time, the radius of curvature of the tip end of the reference probe in the second type of probe is greater than, equal to or smaller than that of the measurement probe in the first type of probe, that is, there is no requirement for the radius of curvature of the tip end between the reference probe and the measurement probe; the distance from the reference probe in the second type of probe to the reference surface is greater than, equal to or smaller than the distance from the measurement probe in the first type of probe to the target surface, that is, there is no requirement for the distance from the reference probe to the reference surface and the distance from the measurement probe to the target surface.

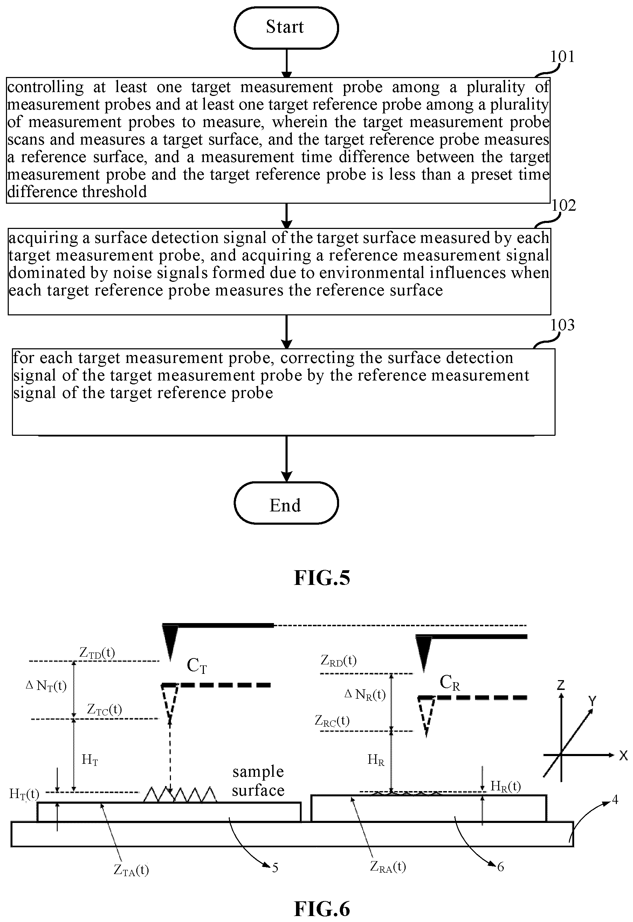

The scanning probe system measurement method for improving the signal-to-noise ratio in this embodiment will be described in detail below in conjunction with the scanning probe system shown in Fig.1, and the specific process is shown in Fig. 5.

Step 101, controlling at least one target measurement probe among the plurality of measurement probes and at least one target reference probe among the plurality of reference probes to measure , wherein the target measurement probe scans and measures the target surface, the target reference probe measures the reference surface, and the measurement time difference between the target measurement probe and the target reference probe is less than a preset time difference threshold.

Specifically, when it is necessary to scan and measure the target surface of a sample (such as a wafer, silicon wafer, quartz wafer, etc.), the main control device selects at least one measurement probe from a plurality of measurement probes as the target measurement probe, that is, the number of target measurement probes is greater than or equal to one and less than or equal to the number of measurement probes. In addition, the main control device will also select at least one target reference probe from a plurality of reference probes, the measurement time difference between the target measurement probe and the target reference probe is less than a preset time difference threshold, that is, at this time, it can be considered that the target measurement probe and the target reference probe measure simultaneously or almost simultaneously.

The main control device controls the target measurement probe and the target reference probe to measure simultaneously through the longitudinal controller communicatively connected to the target measurement probe and the target reference probe, each target measurement probe is used to perform three-dimensional morphology scanning measurement on the target surface of the sample, and each target reference probe is used to measure the reference surface, and the lateral resolution of each target reference probe measuring the reference surface is lower than that of the target probe measuring the measurement surface. Additionally, the longitudinal controller is capable of controlling movement in the Z direction of the target measurement probe or target reference probe communicatively connected thereto.

It should be noted that, before the measurement, the distance $S_R$ between the target reference probe and its measured reference surface can be controlled to be greater than the distance $S_T$ between the target measurement probe and its measured target surface, for example the distance $S_R$ is at least two to five times the distance $S_T$, at this time, the surface sensed by the target reference probe is much larger than the surface sensed by the target measurement probe, that is, the surface resolution measured by the target reference probe is much lower than the surface resolution measured by the target measurement probe. Therefore, the surface "seen" by the target reference probe is smoother than the surface "seen" by the target measurement probe, which means that the target reference probe is measuring a smooth surface, while the target reference probe is measuring a fine-structured surface.

Step 102, acquiring surface detection signals of the target surface measured by the target measurement probes, and acquiring reference measurement signals dominated by noise signals formed due to environmental influences when the target reference probes measure the reference surface.

Specifically, in a simultaneous measurement process, each target measurement probe performs three-dimensional topography scanning measurement for a corresponding area on the target surface of the sample, and the target reference probe measures the reference surface, since the lateral resolution measured by the target reference probe is lower than that of the target measurement probe and lower than the preset resolution value, the target reference probe is less affected by the fluctuation of the reference surface, the measurement of the target reference probe is not to acquire the precise spatial scanning signal of the reference surface, but to measure a signal dominated by the noise signal formed due to the influence of the environment on the target reference probe; after one measurement is completed, the longitudinal controllers read the surface detection signals of the target surface measured by the target measurement probes communicatively connected thereto and send to the main control device, the longitudinal controllers read the reference measurement signals dominated by the noise signals formed due to the environmental influences when each target reference probe communicatively connected thereto measures the reference surface and send to the main control device.

Step 103, for each target measurement probe, correcting the surface detection signal of the target measurement probe by the reference measurement signal of the target reference probe.

Specifically, the reference measurement signals output by the target reference probes are signals dominated by the noise signals formed due to the influence of the environment on the target reference probes(the noise signals generally comprise the noise of the current environment and the noise of the vibration received), and the target reference probe is less affected by the fluctuation of the reference surface when measuring, thus the reference measurement signal can also reflect the noise contained in the surface detection signal measured by the target measurement probe. For each target measurement probe, the main control device can use the reference measurement signal of the target reference probe measured simultaneously or almost simultaneously with the target measurement probe to correct the surface detection signal of the target measurement probe, and obtain the corrected measurement result of target measurement probe; thereby correcting the surface detection signals of the respective target measurement probes by the reference measurement signals of the target reference probes respectively, that is, using the reference measurement signal of the target reference probe to remove the noise signals contained in the surface detection signals of the respective target measurement probes, reducing the noise signal contained in the surface detection signal of the target measurement probe, and improving the signal-to-noise ratio of the surface detection signal of the target measurement probe.

It should be noted that, in this embodiment, it is possible to set a corresponding relationship between the measurement probes and the reference probes, and each measurement probe corresponds to at least one reference probe, when the measurement probe is controlled to measure, its corresponding reference probe is also correspondingly controlled to measure simultaneously. If the measurement probe corresponds to multiple reference probes, when the measurement probe is controlled to measure, the corresponding multiple reference probes are also correspondingly controlled to measure simultaneously, when correcting the surface detection signal of the target measurement probe by the reference measurement sigals of a plurality of reference probes, it is possible to use the average or median of the reference measurement signals of the plurality of reference probes to acquire a signal for correcting the surface detection signal of the target measurement probe. However, it is not limited to this, and there is no need to set the corresponding relationship between the measuring probe and the reference probe, it is only necessary to ensure that when each target measurement probe is measuring the target surface, at least one reference probe is simultaneously measuring, and the lateral resolution measured by the reference probe selected for the simultaneous measurement is less than the lateral resolution measured by the target measurement probe.

In this embodiment, for each target measurement probe, correcting the surface detection signal of the target measurement probe by the reference measurement signal of the target reference probe, comprising the following two methods:

Method 1: Post-measurement data processing method. For each target measurement probe signal and reference probe signal measured simultaneously or almost simultaneously, correcting the surface detection signal of the target measurement probe by multiplying the reference measurement signal of the target reference probe and a weighting coefficient, comprising: calculating the product of the reference measurement signal of the target reference probe and a preset weighting coefficient; for each target measurement probe, using the difference obtained by subtracting the product of the reference probe and the weighting coefficient from the surface detection signal of the target measurement probe as the corrected measurement result of the target measurement probe, i.e., the corrected surface detection signal of the target measurement probe.

Method 2: Direct measurement control method. For each target measurement probe, correcting the surface detection signal of the target measurement probe by the reference measurement signal of the reference probe, comprising: calculating the product of the reference measurement signal of the reference probe and a preset weighting coefficient; for each target measurement probe, adjusting the distance between the target measurement probe and the target surface based on a value obtained by multiplying the reference measurement signal of the target reference probe and a preset weighting coefficient, and reacquiring the surface detection signal of the target measurement probe as the corrected measurement result of the target measurement probe, that is, the corrected surface detection signal of the target measurement probe. At this time, the speed of acquiring the measurement signal of the reference probe can be set to be faster than the change speed of the environmental noise, and using the signal given by the reference probe as the control signal causes the distance from the target probe to the measured surface to be compensated, so as to achieve the purpose of removing noise when the target probe is measuring.

The scanning probe system measurement method in this embodiment will be specifically described below with reference to Fig. 1 and Fig. 6, wherein, only taking one target measurement probe $C_T$ and one target reference probe $C_R$ as an example, the target measurement probe $C_T$ is used to measure the surface of the sample 5 to be measured, and the target reference probe $C_R$ is used to measure the reference surface of the reference sample 6, and the target measurement probe $C_T$ and the target reference probe $C_R$ measure simultaneously or almost simultaneously.

During one measurement, the main control device 2 controls the target measurement probe $C_T$ and the target reference probe $C_R$ to measure at time t simultaneously or almost simultaneously, the main control device 2 acquires the surface detection signal of the surface of the sample 5 to be measured measured by the target measurement probe $C_T$, and acquires the reference measurement signal dominated by the noise signal formed due to the environmental influence measured by the target reference probe $C_R$ at the same time.

The longitudinal coordinate signal $Z_1(t)$ of the surface probe in the Z-axis direction measured by the target measurement probe $C_T$ at time t is determined by the three-dimensional morphology of the target surface and the noise signal, which can be described as:

$$Z_{TD}(t) = Z_{TC}(t) + \Delta N_T(t) \qquad \text{equation (1)}$$

wherein, Z represents the coordinate value in the height direction, $Z_{TD}(t)$ represents the surface detection signal of the target surface measured by the target measurement probe $C_T$ at time t, $Z_{TC}(t)$ represents the height signal of the target measurement probe $C_T$ at time t without the influence of noise signals, that is, the longitudinal coordinate value, $\Delta N_T(t)$ represents the height change signal of the target measurement probe $C_T$ caused by the noise signal at time t. It should be noted that $Z_{TD}(t)$ represents the coordinate value measured by the target measurement probe $C_T$ at time t, and $Z_{TC}(t)$ represents the coordinate value measured by the target measurement probe $C_T$ at time t without the influence of noise signals, therefore, in the equation $Z_{TD}(t)-Z_{TC}(t)=\Delta N_T(t)$ obtained after transformation of the above equation (1), $Z_{TD}(t)-Z_{TC}(t)=\Delta N_T(t)$ represents the distance between two coordinate points in the probe height direction, that is, the distance change value caused by noise. Those in subsequent equations are also similar to the above and will not be repeated one by one.

Similarly, the reference measurement signal $Z_{RD}(t)$ measured by the target reference probe $C_R$ at time t can be described as:

$$Z_{RD}(t)= Z_{RC}(t)+\Delta N_R(t) \qquad \text{equation (2)}$$

wherein, $Z_{RD}(t)$ represents the reference measurement signal of the reference surface measured by the target reference probe $C_R$ at time t, $Z_{RC}(t)$ represents the height signal of the target reference probe $C_R$ at time t without the influence of noise signal, and $\Delta N_R(t)$ represents the height (distance) change value of the target reference probe $C_R$ caused by the noise signal at time t.

Since the target measurement probe $C_T$ and the target reference probe $C_R$ are in a very similar environment, the influences of the noise signal on the target measurement probe $C_T$ and the target reference probe $C_R$ are similar, or even identical, however, due to the different performance of the target measurement probe $C_T$ and the target reference probe $C_R$ and the different distance from the measured surface, the two probes have different changes in the height direction and different noise amplification conditions, so that the signals measured by the target measurement probe $C_T$ and the target reference probe $C_R$ are different, which also leads to the absolute values of the noise signals sensed by the two probes are not completely equal, therefore, there is a certain linear correlation between the two noise signals, which can be described by a preset weighting coefficient $\alpha$, that is:

$$\Delta N_T(t)= \alpha*\Delta N_R(t) \qquad \text{equation (3)}$$

$h_R(t)$ represents the height difference between the three-dimensional topography of the reference surface and the plane on the reference sample at time t, and $H_R$ represents the distance from the preset target reference probe $C_R$ to the reference surface and is a fixed value, then the above equation (2) can be transformed into:

$$Z_{RD}(t)= H_R+h_R(t)+\Delta N_R(t) \qquad \text{equation (4)}$$

Since the target reference probe $C_R$ is not sensitive to the height fluctuation of the reference surface, the reference surface can be regarded as an approximately flat surface, at this time $h_R(t)=0$.

Then the above equation (4) can be transformed into:

$$Z_{RD}(t)= H_R+\Delta N_R(t) \qquad \text{equation (5)}$$

$$\text{And then, } \Delta N_R(t)= Z_{RD}(t)-H_R \qquad \text{equation (6)}$$

in the same way, $h_T(t)$ represents the height difference between the three dimensional topography of the target surface and the reference plane on the sample surface at time t, and $H_T$ represents the distance from the preset target measuring probe $C_T$ to the target surface and is a fixed value, $Z_{TA}(t)$ represents the reference plane on the sample surface and is a fixed value, the above equation (1) can be transformed into:

$$Z_{TD}(t)-Z_{TA}(t) = H_T + h_T(t) +\Delta N_T(t) \qquad \text{equation (7)}$$

then the measured surface topography height under the target probe is:

$$h_T(t)= Z_{TD}(t)-\Delta N_T(t) - H_T- Z_{TA}(t) \qquad \text{equation (8)}$$

Substituting the above equation (3) into equation (8), we can get:

$$h_T(t)= Z_{TD}(t)- \alpha\Delta N_R(t) - H_T- Z_{TA}(t) \qquad \text{equation (9)}$$

Substituting equation (9) into equation (6), we can get:

$$h_T(t) = Z_{TD}(t) - \alpha * (Z_{RD}(t) - H_R) - H_T - Z_{TA}(t) \qquad \text{equation (10)}$$

The above equation (10) is the expression of $h_T(t)$ in the current measurement. Since $H_R$, $H_T$, and $Z_{TA}(t)$ are all fixed values, that is, these values are constant for different plane positions, when the height value of a certain surface position (x) is changed relative to the height value of the adjacent surface position (x+Δx), that is, $H_R$, $H_T$, $Z_{TA}(t)$ are subtracted as quantities that are independent of the surface position, then the above equation (10) can be simplified as:

$$h_T(x + \Delta x, t) \ - \ h_T(x, t) =$$
$$(Z_{TD}(x + \Delta x, t) - Z_{TD}(x, t)) - \alpha(Z_{RD}(x + \Delta x, t) - Z_{RD}(x, t)) \quad \text{equation (11)}$$

Therefore, $Z_{TD}(t) - \alpha Z_{RD}(t)$ can be used as the surface detection signal after removing the noise signal in the current measurement process, that is, the above Method 1 (post-measurement data processing method) is used to correct the surface detection signal $Z_{TD}(t)$ of the target measurement probe $C_T$.

Based on the above derivation process, it can be seen that for each target measurement probe, based on the surface detection signal obtained by the current measurement of the target measurement probe and the reference measurement signal obtained by the current measurement of the target reference probe, and the surface detection signal obtained by the previous measurement of the target measurement probe and the reference measurement signal obtained by the previous measurement of the target reference probe, the height change of the target surface after removing the noise signal is obtained.

If the above Method 2 (direct measurement control method) is used to correct the surface detection signal $Z_{TD}(t)$ of the target measurement probe $C_T$, since the target reference probe $C_R$ is not sensitive to the height fluctuation of the reference surface, the change between the reference measurement signal $Z_{RD}(t+\Delta t)$ obtained in the current measurement and the reference measurement signal $Z_{RD}(t)$ obtained in the previous measurement by the target reference probe $C_R$ is the change of the noise signal. If the change of the noise is much smaller than the time difference Δt, the direct measurement control method can be applied. Details are as follows:
The longitudinal controller 3 communicatively connected to the target reference probe $C_R$ sends the read reference measurement signal $Z_{RD}(t)$ measured by the target reference probe $C_R$ to the main control device 2, the main control device 2 can input the product of the reference measurement signal $Z_{RD}(t)$ and the preset weighting coefficient α to the longitudinal controller 3 communicatively connected to the target measurement probe $C_T$, the height change of the target reference probe $C_R$ caused by $\alpha Z_{RD}(t)$ may be upward or downward, which is reflected in $Z_{RD}(t)$; after $\alpha Z_{RD}(t)$ is input to the longitudinal controller 3 communicatively connected to the target measurement probe $C_T$, the longitudinal controller 3 then based on $\alpha Z_{RD}(t)$, controls the target measurement probe $C_T$ to move in the direction opposite to the influence of the noise signal by a corresponding height change value, then the movement of the target measurement probe $C_T$ in the Z direction caused by the noise signal interference can be compensated, which is equivalent to removing the noise signal from the control signal input to the target measurement probe $C_T$ by the longitudinal controller 3, at this time, the main control device 2 reads the surface detection signal $Z_{TD}(t+\Delta t)$ of the target measurement probe $C_T$ again, and $Z_{TD}(t+\Delta t)$ is the surface detection signal from which the noise signal has been removed, i.e., the corrected surface detection signal. The entire process of control operation is much faster than the change of the noise, so the Δt in the time t+Δt of the whole control process can be ignored, that is, $Z_{TD}(t+\Delta t) = Z_{TD}(t)$.

In the above process, the setting of the preset weighting coefficient α is very important, and the setting method of the preset weighting coefficient is: controlling both the control measurement probe and the reference probe to perform non-scanning measurements; based on the first measurement signal measured by the measurement probe and the second measurement signal measured by the reference probe, performing linear relationship fitting, setting the preset weighting coefficient α, i.e., the coefficient describing the linear relationship.

The setting of the preset weighting coefficient α will be described below in conjunction with the above derivation process. Fig. 6 is a schematic diagram of the height change in the Z direction of the target measurement probe $C_T$ and the target reference probe $C_R$ affected by the noise signal over time.

The main control device 2 controls both the target measurement probe $C_T$ and the target reference probe $C_R$ to perform non-scanning measurement, that is, to stay at the same surface position for measurement. If there is no influence of the noise signal, the measurement values of the target measurement probe $C_T$ and the target reference probe $C_R$ are both one constant value, reflecting the magnitude of attractive force of the probe subjected by the surface, that is, reflecting the distance from the probe to the surface.

By adjusting the preset weighting coefficient α in the above equation (10), the influence of the noise term $\alpha(Z_{RD}(t) - H_R)$ in the equation (10) on the equation (10) is eliminated, so that the change of the noise term has no impact on the equation (10), the preset weighting coefficient α at this time is the preset weighting coefficient α between the target measurement probe $C_T$ and the target reference probe $C_R$, which can be used in the subsequent formal measurement process of the target measurement probe $C_T$ to eliminate the influence of the noise signal on the target measurement probe $C_T$.

Measuring by target measurement probe and target reference probe at the respective same coordinate position:

$$h_T(t) = Z_{TD}(t) - \alpha(Z_{RD}(t) - H_R) - H_T - Z_{TA}(t) \qquad \text{equation (10)}$$

$$h_T(t+\Delta t) = Z_{TD}(t+\Delta t) - \alpha Z_{RD}(t+\Delta t) - H_R) - H_T - Z_{TA}(t+\Delta t) \qquad \text{equation (12)}$$

however, since at the same position, we can get:

$$h_T(t+\Delta t) - h_T(t) = 0 \qquad \text{equation (13)}$$

combining equation (10) to equation (13), we can get:

$$Z_{TD}(t+\Delta t) - \alpha(Z_{RD}(t+\Delta t) - H_R) - H_T - Z_{TA}(t+\Delta t) = Z_{TD}(t) - \alpha(Z_{RD}(t) - H_R) - H_T - Z_{TA}(t) \qquad \text{equation (14)}$$

simplifying equation (14), we can get:

$$Z_{TD}(t) - \alpha Z_{RD}(t) - Z_{TA}(t) = Z_{TD}(t+\Delta t) - \alpha Z_{RD}(t+\Delta t) - Z_{TA}(t+\Delta t) \qquad \text{equation (15)}$$

$$\alpha = ((Z_{TD}(t+\Delta t) - Z_{TA}(t+\Delta t))/(Z_{RD}(t+\Delta t) - Z_{RD}(t)) \qquad \text{equation (16)}$$

It should be noted that, for each measurement probe, the preset weighting coefficient $\alpha$ between it and the corresponding reference probe can be determined based on the above-mentioned method; if the number of selected target reference probes is multiple, the reference measurement signals of multiple target reference probes can be averaged after being weighted to acquire a signal used to correct the surface detection signal of the target measurement probe.

In this embodiment, when the target measurement probe is measuring, one target reference probe is controlled to measure simultaneously with the target measurement probe, and the lateral resolution of the target reference probe measuring the reference surface is less than the preset resolution value and/or the reference surface is a plane, that is, the target reference probe is not sensitive to the fluctuation of the reference surface, thus the reference measurement signal output by the target reference probe is the signal dominated by the noise signal formed due to the influence of the environment on the target reference probe, and the target reference probe and the target measurement probe measure at the same time, so that the reference measurement signal output by the target reference probe is capable of reflecting the noise contained in the surface detection signal measured by the target measurement probe, then, the reference measurement signal of the target reference probe can be used to remove the noise signal contained in the surface detection signal of each target measurement probe, reducing the noise signal contained in the surface detection signal of the target measurement probe, and improving the signal-to-noise ratio of the surface detection signal of the target measurement probe. Therefore, under the same signal-to-noise ratio requirement for the surface detection signals, the requirements of the scanning probe system for noise interference such as vibration and acoustic isolation in the environment can be reduced, which helps to reduce costs.

The second embodiment of the present invention relates to a scanning probe system, referring to Fig. 1, the scanning probe system comprises: a first type of probe, a second type of probe, a carrying drive device, a main control device 2 and a plurality of longitudinal controllers 3, the first type of probe comprises a plurality of measurement probes $C_m$ (only one measurement probe is schematically drawn in the figure), and the second type of probe comprises a plurality of reference probes $C_R$ (only one reference probe is schematically drawn in the figure), both the measurement probe $C_m$ and the reference probe $C_R$ are fixed on the carrying drive device, the carrying drive device is communicatively connected to the main control device 2, the measurement probes $C_m$ are in one-to-one correspondence with and communicatively connected to the longitudinal controllers 3, and each longitudinal controller 3 is communicatively connected to the main control device 2; tips of the first type of probe and the second type of probe face the surface of the sample 5 placed on the sample stage 4, wherein, the reference probes $C_R$ are also in one-to-one correspondence with and communicatively connected to the longitudinal controllers 3. The working mode of the measurement probe comprises any one or any combination of the following: atomic force microscope working mode, conductive atomic force microscope working mode, scanning tunneling microscope working mode, scanning probe magnetic force microscope working mode, scanning kelvin probe force microscope working mode, scanning probe lithography working mode, and scanning probe single ion implantation working mode.

In Fig. 1, the reference surface is the surface of the reference sample 6, and the target surface is the surface of the sample 5 to be measured, that is, the reference probe is used to measure the surface of the reference sample 6, and the target measurement probe is used to measure the surface of the sample 5 to be measured; however, it is not limited to this, the reference surface measured by the reference probe can also be set on the same surface of the sample as the target surface measured by the target measurement probe.

In this embodiment, the lateral resolution of the control reference probe measuring the reference surface is controlled to be less than a preset resolution value and/or the reference surface is a plane; specifically, when the reference surface is a plane, it is possible to avoid the variation of the van der Waals force on the reference probe caused by the fluctuations of the reference surface, that is, to avoid the vertical movement of the reference probe.

The lateral resolution of the reference probe measuring the reference surface is controlled to be less than a preset resolution value, whereby the reference probe is insensitive to the fluctuations of the reference surface.

In one example, the distance between the tip end of the reference probe and the reference surface is greater than a first preset distance value, so that the lateral resolution of the reference probe measuring the reference surface is lower than the preset resolution value.

In one example, the radius of curvature of the tip end of the reference probe is set to be larger than the preset radius of curvature, so that the lateral resolution of the reference probe measuring the reference surface is lower than the preset resolution value.

In one example, the preset resolution value is the lateral resolution of the measurement probe, that is, the lateral resolution of the reference probe measuring the reference surface is lower than the lateral resolution of the probe measuring the target surface. The reference probe is less sensitive to the fluctuations of the reference surface than the target probe.

In one example, the shape of the tip end of the reference probe is any one of the following: three-dimensional spherical, plane square, or ellipse and plane circle, which are only examples and do not limit the shape of the tip end of the reference probe, that is, the tip end of the reference probe can be in any shape, so that the radius of curvature of the tip end of the reference probe is greater than that of the target probe and greater than the preset radius of curvature, enabling the lateral resolution of the reference probe measuring the reference surface to be lower than the preset resolution value, the larger the radius of curvature of the probe, the lower the lateral resolution of the measured three-dimensional topography of the reference surface.

In one example, the distance between the tip end of the reference probe and the reference surface is greater than a first preset distance value, the larger the distance between the reference probe and the reference surface, the lower the lateral resolution of the reference probe for measuring the reference surface; for example, setting the distance between the tip end of the reference probe and the reference surface to be greater than the distance between the tip end of the target probe and the measurement surface enables the lateral resolution of the reference probe for measuring the reference surface to be lower than the lateral resolution of the target probe for measuring the surface; setting the distance between the tip of the target probe and the measurement surface to be greater than the first preset distance value enables the lateral resolution of the reference probe for measuring the reference surface lower than the preset resolution value.

For example, if the radius of curvature of the target measurement probe is between 1 nanometer and 50 nanometers, the radius of curvature of the reference probe can be selected to be at least 5 times that of the target measurement probe, at this time, the radius of curvature of the reference probe is at least between 5nm and 250nm; although increasing the area of the tip end of the reference probe will increase the van der Waals force between the probe and the reference surface, at this time, the distance between the tip end of the reference probe and the reference surface is further adjusted to be greater than the distance from the tip end of the target measurement probe to the measurement surface , that is, the reference probe is far away from the reference surface relative to the target measurement probe, and the van der Waals force will be reduced to the preset measurement range, this greatly reduces the spatial resolution of the reference probe for measuring the reference surface, so as to greatly reduces the influence of the fluctuation structure of the reference surface on the measured value of the reference probe. That is, the reference surface measured by the reference probe can be regarded as a "flat" surface. At this time, even if the reference surface measured by the reference probe and the target surface measured by the target measurement probe are located on the same surface structure, the reference probe will not be too much affected by the surface fluctuation of the sample.

In this embodiment, the measurement probe can be an active probe, a passive probe or a tuning fork probe, and the reference probe can be an active probe, a passive probe or a tuning fork probe; specifically, for passive probes, the bending of the cantilever causes the laser beam emitted to the back of the cantilever to enter position sensors after reflection, the bending of the cantilever is recorded, thereby acquiring the distance signal from the probe to the surface. For active probes, the cantilever is composed of a bimetal, and the resistive wire evaporated on it will change. The change of the resistance wire reflects the bending degree of the cantilever beam, thereby acquiring the distance signal from the probe to the surface.

In this embodiment, in Fig. 1, the carrying drive device comprises a driving portion 11 and at least one scanner 12, a plurality of measurement probes $C_m$ can be divided into one or more probe groups, each probe group corresponds to one scanner 12, the probes in each probe group are fixed on the corresponding scanner 12. The scanner 12 is used to drive the probes fixed thereon to move in a small range in the X, Y, and Z three-dimensional spaces, the driving portion 11 is used to drive all the scanners 12 to drive all the probes to move in a large range in the X, Y, and Z three-dimensional spaces, in addition, the driving portion 11 is used to fix the probe array and can also rotate in the X and Y axis directions for angle adjustment; the main control device 2 is respectively connected to the drive unit 11 and each scanner 12, and the main control device 2 can also be connected to each scanner 12 through the wiring on the drive portion 11, so as to control the movement of the driving portion 11 in the X, Y, and Z axes and the movement of the scanner 12 in the X, Y, and Z axes, and/or to adjust the angular rotation of the scanner 12 in the directions of the X, and Y axes. It should be noted that multiple probe groups can share the same scanner 12, that is, multiple probe groups are fixed on the same scanner 12, or each probe group corresponds to one scanner 12, that is, only one probe group is fixed on each scanner 12.

Wherein, the first type of probe and the second type of probe may have different vibration frequencies, and the first type of probe and the second type of probe are located on the same probe base; specifically, the base can be a scanner of the carrying drive device, and the measurement probe $C_m$ and the reference probe $C_R$ have different vibration frequencies, at this time, the measurement probe Cm and the reference probe $C_R$ can be fixed on the same scanner on the carrying drive device, the measurement probe $C_m$ and the reference probe $C_R$ have different vibration frequencies, and the normal working of each probe will not be affected by crosstalk. As shown in FIG.2, one measurement probe $C_m$ and one reference probe $C_R$ form a MEMS probe array, and the two probes are fixed on the same base (scanner), except that the probes can move freely in the Z direction, the two probes move in other degrees of freedom simultaneously. At this time, because the environments in which the two probes are located are similar, the noise signals sensed by the two probes are also similar.

Alternatively, the measurement probe $C_m$ has the same vibration frequency as the reference probe $C_R$, at this time, the measurement probe $C_m$ and the reference probe $C_R$ can be fixed on different scanners on the carrying drive device, which can prevent the measurement probe $C_m$ and the reference probe $C_R$ from adversely affecting the working of the probes due to crosstalk. As shown in FIG.4, the measurement probe $C_m$ and the reference probe $C_R$ are respectively fixed on different bases (scanners), at this time, the reference probe $C_R$ does not need to follow the measurement probe $C_m$ for scanning measurement, and the reference probe $C_R$ measures the reference surface without moving, so that a purer noise signal can be acquired.

In addition, it is also possible to directly set the distance between the first type of probe and the second type of probe to be greater than the second preset distance value, that is, when the probe is fixed on the scanner, it should be ensure that the distance between the measurement probe $C_m$ and the reference probe $C_R$ is greater than a set distance value, at this time, even if the measurement probe $C_m$ and the reference probe $C_R$ have the same vibration frequency, crosstalk will not occur.

The carrying drive device is used to drive the measuring probe $C_m$ and the reference probe $C_R$ to move. Specifically, the main control device 2 controls the carrying drive device. In addition, the main control device 2 is also used to control data storage and output printing.

The main control device 2 is used to control at least one target measurement probe among the plurality of measurement probes and at least one target reference probe among the plurality of reference probes to measure, the measurement time difference between the target measurement probe and the target reference probe is less than a preset time difference threshold, so as to enable the target measurement probe and the target reference probe to measure simultaneously or almost simultaneously. Specifically, the main control device 2 sends a control signal to the longitudinal controllers 3 communicatively connected to the target measurement probe and the target reference probe, after receiving the control signal, each longitudinal controller 3 controls the target measurement probe and the target reference probe to measure simultaneously according to the set time. In addition, the main control device 2 is also communicatively connected to the sample stage 4 to control the movement of the sample stage 4 in the directions of XYZ axes and adjust the angle.

The target measurement probe is used to scan and measure the target surface.

The target reference probe is used to measure the reference surface.

The main control device 2 is also used to acquire the surface detection signal of the target surface measured by each target measurement probe, and acquire the reference measurement signal dominated by the noise signal formed due to the environmental influence when each target reference probe measures the reference surface; the main control device 2 is also used to, for each target measurement probe, correct the surface detection signal of the target measurement probe by the reference measurement signal of the target reference probe; the longitudinal controller 3 is used to control the movement of the communicatively connected measurement probe in the direction perpendicular to the target surface.

The main control device 2 is used to calculate the product of the reference measurement signal of the reference probe and the preset weighting coefficient; the main control device 2 is used to, for each target measurement probe, by subtracting the product from the surface detection signal of the target measurement probe, acquire the corrected surface detection signal of the target measurement probe.

The method for the main control device 2 to set the preset weighting coefficients is as follows: the main control device 2 is used to control both the measurement probe and the reference probe to perform non-scanning measurement; the main control device 2 is used to, based on the first measurement signal measured by the measurement probe and the second measurement signal measured by the reference probe, perform linear relationship fitting, and the correlation coefficient of its linear fitting is the preset weighting coefficient to be set.

The main control device 2 is used to calculate the product of the reference measurement signal of the reference probe and the preset weighting coefficient; the main control device 2 is used to, for each target measurement probe, send the product of the reference measurement signal of the reference probe and the preset weighting coefficient to the longitudinal controller 3 communicatively connected to the target measurement probe; the longitudinal controller 3 is used to, based on the received product corresponding to the target measurement probe communicatively connected therto, adjust the distance between the target measurement probe communicatively connected thereto and the target surface; the main control device 2 is used to reacquire the surface detection signal of the target measurement probe after distance adjustment as the corrected surface detection signal of the target measurement probe.

Since the first embodiment corresponds to this embodiment, this embodiment can be implemented in cooperation with the first embodiment. The relevant technical details mentioned in the first embodiment are still valid in this embodiment, and the technical effects that can be achieved in the first embodiment can also be realized in this embodiment, and in order to reduce repetition, details are not repeated here. Correspondingly, the relevant technical details mentioned in this embodiment can also be applied in the first embodiment.

The preferred embodiments of the present invention have been described in detail above, but it should be understood that aspects of the embodiments can be modified, if desired, to employ aspects, features and concepts of various patents, applications and publications to provide further embodiments.

Considering the detailed description above, it is possible to make these and other variations to the embodiments. In general, the terms used in the claims should not be considered as limiting the specific embodiments disclosed in the specification and claims, but it should be understood to include all possible embodiments along with the full scope of equivalents to which such claims are entitled.

**Claims**

1. A measurement method of a scanning probe system for improving signal-to-noise ratio, **characterized in that** the scanning probe system comprises: a first type of probe and a second type of probe, the first type of probe comprises a plurality of measurement probes, the second type of probe comprises a plurality of reference probes, a lateral resolution of the reference probes for measuring the reference surface is lower than a preset resolution value; the method comprises:

   controlling at least one target measurement probe among the plurality of measurement probes and at least one target reference probe among the plurality of measurement probes to measure, wherein the target measurement probe scan and measure a target surface, and the target reference probe ,measure the reference surface, and a measurement time difference between the target measurement probe and the target reference probe is less than a preset time difference threshold;
   acquiring a surface detection signal of the target surface measured by the respective target measurement probe, and acquiring a reference measurement signal dominated by a noise signal formed due to environmental influence when the respective target reference probe measures the reference surface;
   for each said target measurement probe, correcting the surface detection signal of the target measurement probe by the reference measurement signal of the target reference probe.

2. The measurement method of a scanning probe system for improving signal-to-noise ratio according to claim 1, wherein, for each said target measurement probe, correcting the surface detection signal of the target measurement probe by the reference measurement signal of the target reference probe, comprising:

   calculating a product of the reference measurement signal of the target reference probe and a preset weighting coefficient;
   for each said target measurement probe, using the difference obtained by subtracting the product from the surface detection signal of the target measurement probe as the corrected measurement result of the target measurement probe.

3. The measurement method of a scanning probe system for improving signal-to-noise ratio according to claim 2, wherein a setting method of the preset weighting coefficient is:

controlling both the measurement probe and the reference probe to perform non-scanning measurement;
based on a first measurement signal measured by the measurement probe and a second measurement signal measured by the reference probe, performing linear relationship fitting, and setting the preset weighting coefficient as a coefficient describing the linear relationship, so that the first measurement signal is equal to the second measurement signal multiplied by the preset weighting coefficient.

4. The measurement method of a scanning probe system for improving signal-to-noise ratio according to claim 1, wherein, for each said target measurement probe, correcting the surface detection signal of the target measurement probe by the reference measurement signal of the target reference probe, comprising:

calculating a product of the reference measurement signal of the target reference probe and a preset weighting coefficient;
for each said target measurement probe, , adjusting the distance between the target measurement probe and the target surface based on a value obtained by multiplying the reference measurement signal of the target reference probe and the preset weighting coefficient, and reacquiring the surface detection signal of the target measurement probe as the corrected surface detection signal of the target measurement probe.

5. The measurement method of a scanning probe system for improving signal-to-noise ratio according to claim 1, wherein the distance between a tip end of the reference probe and the reference surface is greater than a first preset distance value.

6. The measurement method of a scanning probe system for improving signal-to-noise ratio according to claim 5, wherein the first preset distance value is the distance from the target measurement probe to the target surface.

7. The measurement method of a scanning probe system for improving signal-to-noise ratio according to claim 1, wherein a radius of curvature of a tip end of the reference probe is greater than a preset radius of curvature, so that the lateral resolution of the reference probe for measuring the reference surface is lower than the preset resolution value.

8. The measurement method of a scanning probe system for improving signal-to-noise ratio according to claim 1 or 7, wherein the preset resolution value is the lateral resolution of the measurement probe.

9. The measurement method of a scanning probe system for improving signal-to-noise ratio according to claim 7, wherein the preset radius of curvature is the radius of curvature of a tip end of the target measurement probe.

10. The measurement method of a scanning probe system for improving signal-to-noise ratio according to claim 1, wherein the shape of a tip end of the reference probe is one of the following arbitrary shapes: three-dimensional spherical, flat square, flat round and flat oval.

11. The measurement method of a scanning probe system for improving signal-to-noise ratio according to claim 7, wherein the radius of curvature of a tip end of the target probe is between 1 nanometer and 50 nanometers, the radius of curvature of the tip end of the reference probe is at least 5 times that of the target probe, and the radius of curvature of the tip end of the reference probe is at least between 5 nanometers and 250 nanometers.

12. The measurement method of a scanning probe system for improving signal-to-noise ratio according to claim 1, wherein the first type of probe and the second type of probe are respectively located on a same probe base or on different probe bases.

13. The measurement method of a scanning probe system for improving the signal-to-noise ratio according to claim 1, wherein the measurement probes in the first type of probe are used to perform spatial scanning measurement on the target surface or operate at each scanning position, the reference probes in the second type of probe are forbidden to perform spatial scanning measurement on the reference surface, and the reference probes measure the same position of the reference surface each time.

**14.** The measurement method of a scanning probe system for improving signal-to-noise ratio according to claim 13, wherein the radius of curvature of the tip end of the reference probe in the second type of probe is greater than, equal to or smaller than the radius of curvature of the tip end of the measurement probe in the first type of probe, the distance from the reference probe in the second type of probe to the reference surface is greater than, equal to or smaller than the distance from the measurement probe in the first type of probe to the target surface.

**15.** The measurement method of a scanning probe system for improving signal-to-noise ratio according to claim 1, wherein the distance between the first type of probe and the second type of probe is greater than a second preset distance value.

**16.** The measurement method of a scanning probe system for improving signal-to-noise ratio according to claim 1, wherein the first type of probe and the second type of probe have different vibration frequencies, and the first type of probe and the second type of probe are located on the same probe base.

**17.** The measurement method of a scanning probe system for improving signal-to-noise ratio according to claim 1, wherein the first type of probe and the second type of probe are active probes and passive probes or tuning fork probes.

**18.** The measurement method of a scanning probe system for improving signal-to-noise ratio according to claim 1, wherein the working mode of the measurement probe comprises any one or any combination of the following: atomic force microscope working mode, conductive atomic forceworking mode, scanning tunneling microscope working mode, scanning probe magnetic force microscope working mode, scanning kelvin probe force microscope working mode, scanning probe lithography working mode, and scanning probe single ion implantation working mode.

**19.** The measurement method of a scanning probe system for improving the signal-to-noise ratio according to claim 1, wherein controlling at least one target measurement probe among the plurality of measurement probes and at least one target reference probe among the plurality of measurement probes to measure, comprising:
based on a preset corresponding relationship between the measurement probe and the reference probe, controlling at least one target measurement probe among the plurality of measurement probes and at least one target reference probe corresponding to the target measurement probe among the plurality of measurement probes to measure.

**20.** A scanning probe system, wherein comprising: a first type of probe, a second type of probe, a carrying drive device, a main control device and a plurality of longitudinal controllers, the first type of probes comprises a plurality of measurement probes, the second type of probes comprises a plurality of reference probes, and both the measurement probes and the reference probes are fixed on the carrying drive device, the carrying drive device is communicatively connected to the main control device, the measurement probes are **in** one-to-one correspondence with and are communicatively connected to the longitudinal controllers, and the longitudinal controllers are communicatively connected to the main control device; a lateral resolution of the reference probes measuring a reference surface is lower than a preset resolution value;

the carrying drive device is used to drive the measurement probes and the reference probes to move;
the main control device is used to control at least one target measurement probe among the plurality of measurement probes and at least one target reference probe among the plurality of measurement probes to measure, a measurement time difference between the target measurement probe and the target reference probe is less than a preset time difference threshold.
the target measurement probe is used to scan and measure a target surface;
the target reference probe is used to measure the reference surface;
the main control device is also used to acquire the surface detection signal of the target surface measured by the respective target measurement probe, and to acquire the reference measurement signal dominated by noise signals formed due to environmental influences when the respective target reference probe measures the reference surface;
the main control device is further used to, for each said target measurement probe, correct the surface detection signal of the target measurement probe by the reference measurement signal of the target reference probe;
the longitudinal controllers are used to control the movement of the measurement probe communicatively connected thereto in a direction perpendicular to the target surface.

**21.** The scanning probe system according to claim 20, wherein the main control device is used to calculate the product of the reference measurement signal acquired by the reference probe and a preset weighting coefficient;

the main control device is used to, for each said target measurement probe, set the difference obtained by subtracting the product from the surface detection signal of the target measurement probe as the corrected measurement result of the target measurement probe.

22. The scanning probe system according to claim 21, wherein a method of setting the preset weighting coefficient by the main control device is as follows:

the main control device is used to control both the measurement probe and the reference probe to perform non-scanning measurement;

the main control device is used to perform a linear relationship fitting based on a first measurement signal measured by the measurement probe and a second measurement signal measured by the reference probe, and set the preset weighting coefficient as a coefficient describing the linear relationship, causing the first measurement signal to be equal to the second measurement signal multiplied by the preset weighting coefficient.

23. The scanning probe system according to claim 21, wherein the main control device is used to calculate the product of the reference measurement signal of the reference probe and the preset weighting coefficient;

the main control device is used to, for each said target measurement probe, send the product of the reference measurement signal of the reference probe and the preset weighting coefficient to the longitudinal controllers communicatively connected with the target measurement probe;

the longitudinal controllers are used to adjust the distance between the target measurement probe communicatively connected thereto and the target surface based on the received product corresponding to the target measurement probe communicatively connected thereto;

the main control device is used to reacquire the surface detection signal of the target measurement probe after distance adjustment as the corrected surface detection signal of the target measurement probe.

24. The scanning probe system according to claim 20, wherein the distance between a tip end of the reference probe and the reference surface is greater than a first preset distance value.

25. The scanning probe system according to claim 24, wherein the first preset distance value is the distance from the target measurement probe to the target surface.

26. The scanning probe system according to claim 20, wherein a radius of curvature of a tip end of the reference probe is greater than a preset radius of curvature, so that the lateral resolution of the reference probe for measuring the reference surface is lower than the preset resolution value.

27. The scanning probe system according to claim 20 or 26, wherein the preset resolution value is the lateral resolution of the measurement probe.

28. The scanning probe system according to claim 26, wherein the preset radius of curvature is the radius of curvature of the tip end of the target measurement probe.

29. The scanning probe system according to claim 20, wherein the shape of a tip end of the reference probe is one of the following arbitrary shapes: three-dimensional spherical, flat square, flat round and flat oval.

30. The scanning probe system according to claim 26, wherein the radius of curvature of the tip end of the target probe is between 1 nanometer and 50 nanometers, the radius of curvature of the tip end of the reference probe is at least 5 times the radius of curvature of the tip end of the target probe, and the radius of curvature of the tip end of the reference probe is at least between 5 nanometers and 250 nanometers.

31. The scanning probe system according to claim 20, wherein the first type of probe and the second type of probe are respectively located on the same probe base or on different probe bases.

32. The scanning probe system according to claim 20, wherein the measurement probes in the first type of probes are used to perform spatial scanning measurements on the target surface or operate at each scanning position, the reference probes in the second type of probe are forbidden to perform spatial scanning measurements on the reference surface, and the reference probe measures the same position of the reference surface each time.

**33.** The scanning probe system according to claim 21, wherein the radius of curvature of a tip end of the reference probe in the second type of probe is greater than, equal to or smaller than the radius of curvature of a tip end of the measurement probe in the first type of probe, the distance from the reference probe in the second type of probe to the reference surface is greater than, equal to or smaller than the distance from the measurement probe in the first type of probe to the target surface.

**34.** The scanning probe system according to claim 20, wherein the distance between the first type of probe and the second type of probe is greater than a second preset distance value.

**35.** The scanning probe system according to claim 20, wherein the carrying drive device comprises at least one probe base, the first type of probes and the second type of probes have different vibration frequencies, and the first type of probe and the second type of probe are located on the same probe base.

**36.** The scanning probe system according to claim 20, wherein the first type of probe and the second type of probe are active probes and passive probes or tuning fork probes.

**37.** The scanning probe system according to claim 20, wherein the working mode of the measurement probe comprises any one or any combination of the following:
atomic force microscope working mode, conductive atomic force working mode, scanning tunneling microscope working mode, scanning probe magnetic force microscope working mode, scanning kelvin probe force microscope working mode, scanning probe lithography working mode, and scanning probe single ion implantation working mode.

**38.** The scanning probe system according to claim 20, wherein the main control device is used to, based on preset corresponding relationships between the measurement probes and the reference probes, control at least one target measurement probe among the plurality of measurement probes and at least one target reference probe corresponding to the target measurement probe among the plurality of measurement probes to measure.

**FIG.1**

**FIG.2**

**FIG.3**

**FIG.4**

Start

controlling at least one target measurement probe among a plurality of measurement probes and at least one target reference probe among a plurality of measurement probes to measure, wherein the target measurement probe scans and measures a target surface, and the target reference probe measures a reference surface, and a measurement time difference between the target measurement probe and the target reference probe is less than a preset time difference threshold
101

acquiring a surface detection signal of the target surface measured by each target measurement probe, and acquiring a reference measurement signal dominated by noise signals formed due to environmental influences when each target reference probe measures the reference surface
102

for each target measurement probe, correcting the surface detection signal of the target measurement probe by the reference measurement signal of the target reference probe
103

End

**FIG.5**

**FIG.6**

## INTERNATIONAL SEARCH REPORT

| International application No. |
|---|
| **PCT/CN2023/108131** |

### A.    CLASSIFICATION OF SUBJECT MATTER

G01Q 70/08(2010.01)i

According to International Patent Classification (IPC) or to both national classification and IPC

### B.    FIELDS SEARCHED

Minimum documentation searched (classification system followed by classification symbols)

IPC:G01Q，G01B，G01R

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI: 前微科技, 百及纳米科技, 周向前, 扫描, 探针, 信噪比, 参照, 横向分辨率, 噪音, 校正, 修正, 针尖, 曲率半径, scanning probe, signal to noise ratio, reference, resolution, lateral direction, noise, correction, needle tip, radius of curvature, FPM

### C.    DOCUMENTS CONSIDERED TO BE RELEVANT

| Category* | Citation of document, with indication, where appropriate, of the relevant passages | Relevant to claim No. |
|---|---|---|
| A | CN 114088979 A (PARCAN NANOTECH (SHANGHAI) CO., LTD.) 25 February 2022 (2022-02-25)<br>entire document | 1-38 |
| A | CN 101324429 A (INSTITUTE OF ELECTRICAL ENGINEERING, CHINESE ACADEMY OF SCIENCES) 17 December 2008 (2008-12-17)<br>entire document | 1-38 |
| A | CN 107300629 A (TSINGHUA UNIVERSITY) 27 October 2017 (2017-10-27)<br>entire document | 1-38 |
| A | CN 113092826 A (SUN YAT-SEN UNIVERSITY et al.) 09 July 2021 (2021-07-09)<br>entire document | 1-38 |
| A | US 5898106 A (DIGITAL INSTRUMENTS INC.) 27 April 1999 (1999-04-27)<br>entire document | 1-38 |
| A | US 2010235955 A1 (INFINITESIMA LTD.) 16 September 2010 (2010-09-16)<br>entire document | 1-38 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 October 2023** | **25 October 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/108131** |

**C.    DOCUMENTS CONSIDERED TO BE RELEVANT**

| Category* | Citation of document, with indication, where appropriate, of the relevant passages | Relevant to claim No. |
|---|---|---|
| A | US 6196061 B1 (NANODEVICES INC.) 06 March 2001 (2001-03-06)<br>entire document | 1-38 |
| A | TW 201809676 A (CARL ZEISS SMT GMBH) 16 March 2018 (2018-03-16)<br>entire document | 1-38 |

Form PCT/ISA/210 (second sheet) (July 2022)

**INTERNATIONAL SEARCH REPORT**
Information on patent family members

International application No.

**PCT/CN2023/108131**

| Patent document cited in search report | | | Publication date (day/month/year) | Patent family member(s) | | | Publication date (day/month/year) |
|---|---|---|---|---|---|---|---|
| CN | 114088979 | A | 25 February 2022 | None | | | |
| CN | 101324429 | A | 17 December 2008 | None | | | |
| CN | 107300629 | A | 27 October 2017 | None | | | |
| CN | 113092826 | A | 09 July 2021 | None | | | |
| US | 5898106 | A | 27 April 1999 | JP | 2001517777 | A | 09 October 2001 |
| | | | | EP | 1025416 | A1 | 09 August 2000 |
| | | | | EP | 1025416 | A4 | 24 January 2001 |
| | | | | WO | 9915851 | A1 | 01 April 1999 |
| | | | | WO | 9915851 | A9 | 03 June 1999 |
| US | 2010235955 | A1 | 16 September 2010 | WO | 2009019513 | A1 | 12 February 2009 |
| | | | | GB | 0715102 | D0 | 12 September 2007 |
| | | | | US | 8220066 | B2 | 10 July 2012 |
| US | 6196061 | B1 | 06 March 2001 | US | 6279389 | B1 | 28 August 2001 |
| TW | 201809676 | A | 16 March 2018 | TWI | 656347 | B | 11 April 2019 |
| | | | | WO | 2018029151 | A1 | 15 February 2018 |
| | | | | DE | 102016214658 | A1 | 08 February 2018 |
| | | | | DE | 102016214658 | B4 | 08 October 2020 |

Form PCT/ISA/210 (patent family annex) (July 2022)